# EUROPÄISCHE PATENTSCHRIFT

(11) **EP 0 665 542 B1**
(45) Veröffentlichungstag und Bekanntmachung des Hinweises auf die Patenterteilung: **25.08.1999**
(21) Anmeldenummer: 95100798.8
(22) Anmeldetag: 21.01.1995
(51) Int. Cl.: G11B 15/32, G11B 15/50

(54) **Magnetbandkassettenrecorder**
Taperecorder
Enregistreur à bande magnétique

(30) Priorität: 31.01.1994 DE 4402789
(43) Veröffentlichungstag der Anmeldung: 02.08.1995
(73) Patentinhaber: DEUTSCHE THOMSON-BRANDT GMBH, 78048 Villingen-Schwenningen (DE)
(72) Erfinder: Weisser, Fritz, D-78112 St. Georgen (DE)

(56) Entgegenhaltungen:
- EP-A- 0 212 720
- WO-A-90/12397
- DE-A- 2 816 699
- DE-A- 3 200 279
- US-A- 3 532 293

## Beschreibung

Die Erfindung betrifft Magnetbandkassettenrecorder mit Aufwickel- und Abwickeltellern zum Antrieb von Bandwickeln, zwischen denen ein Magnetband innerhalb der auf die Wickelteller gelegten Kassette hin- und hertransportiert wird.

Bekannt sind Magnetbandkassettenrecorder, bei denen ein für den Antrieb des Magnetbandes bestimmter Bandantriebsmotor auch die Wickelteller antreibt (DE 3935150). Eine Bandantriebswelle treibt dabei das Magnetband außerhalb der die beiden Wickelteller bedeckenden Magnetbandkassette an. Der Bandantriebsmotor treibt in erster Linie das Magnetband über die Bandantriebswelle an. Über ein Antriebselement, ein eine Rutschkupplung aufweisendes Planetenradgetriebe und ein Schwenkrad, das mit dem jeweils ziehenden Wickelteller kraftschlüssig verbindbar ist, treibt er außerdem den jeweils gewählten Auf- oder Abwickelteller an, im folgenden vereinfacht Wickelteller genannt. Solche Magnetbandkassettenrecorder finden als Aufnahme- und/oder Abspielgeräte für Informationen, insbesondere im Video- und Audiobereich Verwendung.

Bei der DE 3935150 ist die Kupplungskraft, die für die verschiedenen Betriebszustände jeweils unterschiedlich groß ist, durch einen mittels eines Hebels höhenverstellbaren Kupplungsring einstellbar. Über den Hebel und eine Kurvenscheibe läßt sich die Andruckkraft des höhenverstellbaren Kupplungsrings gegen den unteren Teil des um die gemeinsame ortsfeste Achse drehbaren Planetenradträgers von einem die Betriebsarten, z.B. Wiedergabe, Rücklauf, Suchlauf, Umspulen, steuernden Motor, z.B. dem Fädelmotor, einstellen. Eine um die ortsfeste Achse angeordnete Druckfeder preßt den Planetenradträger auf den Kupplungsring. Das Planetenradgetriebe läßt sich für den Umspulbetrieb überbrücken, indem Noppen des unteren Planetenradträgers in Ausnehmungen des durch das Antriebselement, beispielsweise ein Riemen, umschlungenen Elements, beispielsweise eine Riemenscheibe, durch die Feder unterstützt eingreifen. Durch die Kupplung der mittels des Bandantriebsmotors angetriebenen Riemenscheibe mit dem Planetenradträger wird das Glockenrad des Planetenradgetriebes und damit das mit diesem in Eingriff stehende Schwenkrad über die Planetenträger direkt angetrieben.

Diese Bauform hat sich zwar in der Praxis bewährt, doch erfordert sie infolge der Überbrückung des Planetenradgetriebes durch die Verwendung von Noppen und Ausnehmungen sehr genau gefertigte Bauteile und bei Verwendung einer Druckfeder zur Gewährleistung einer gleichbleibenden Kupplungskraft ebenfalls enge Bauteiltoleranzen.

Der Erfindung liegt die Aufgabe zugrunde, einen anderen, insbesondere verbesserten Antrieb der Wickelteller zu schaffen.

Diese Aufgabe wird durch die im Anspruch 1 definierten Merkmale gelöst. Weiterbildungen der Erfindung sind in den Unteransprüchen beschrieben.

Im Prinzip wird zunächst wie bei der Anordnung nach DE 3935150 dem die Wickelteller zur Auf- bzw. Abwicklung des Magnetbandes antreibenden Schwenkrad ein Planetenradgetriebe vorgeschaltet, das mit einer Rutschkupplung zusammenwirkt. Der Bandantriebsmotor für das Magnetband treibt ein Antriebselement an, das vorteilhafterweise ein Riemen sein kann und das mit dem Planetenradgetriebe in Verbindung steht. Das Schwenkrad ist um eine ortsfeste Achse schwenkbar so angeordnet, daß es mit dem Auf- und dem Abwickelteller gleichermaßen in Eingriff kommen kann. Die ortsfeste Achse kann vorteilhafterweise als zentrale Achse der Anordnung aus Planetenradgetriebe und Rutschkupplung dienen.

Eine Andruckrolle drückt das Magnetband an die Bandantriebswelle des Bandantriebsmotors an. Diese Andruckrolle sollte aus einem nachgiebigen, z.B. rutschfesten Material, wie beispielsweise Gummi, gefertigt sein.

Die mit dem Planetenradgetriebe in Verbindung stehende Rutschkupplung ist um dieselbe ortsfeste Achse herum angeordnet wie das Planetenradgetriebe. Sie weist bei der erfindungsgemäßen Konstruktion zwei in Richtung der ortsfesten Achse übereinander angeordnete, ringförmige Kupplungsteile und ein weiteres mit dem Planetenradträger verbundenes drittes Kupplungsteil auf, deren Kupplungsflächen einander zugewandt sind. Zwischen diesen Kupplungsflächen sind Reibungselemente angeordnet, die vorteilhafterweise aus einem Filzmaterial bestehen können.

Um einzelne oder mehrere ringförmige Kupplungsteile an der Umdrehung zu hindern und somit die Kupplungskraft für die verschiedenen Betriebszustände unterschiedlich groß einstellen zu können, sind Mittel vorgesehen, die die Kupplungsteile blockieren können. Die Wirkung der Rutschkupplung ist dadurch allen Betriebszuständen so angepaßt, daß für jeden Betriebszustand das erforderliche Drehmoment wirksam ist.

Der Planetenradträger ist oberhalb eines der ringförmigen Kupplungsteile angeordnet. Zwischen ihm und diesem Kupplungsteil ist kein Reibungselement vorgesehen, wohl aber eine Druckfeder, die sich einerseits gegen den Planetenradträger abstützt und andererseits gegen eine auf dem Kupplungsteil gleitende Scheibe. Bei einer solchen gleitenden Verbindung ist eine gewisse Reibung unvermeidbar. Eine Gleitreibung zwischen Scheibe und Kupplungsteil wird zwar nicht benötigt und daher auch nicht angestrebt, stört aber nicht, weil sie im Gesamtreibungskonzept berücksichtigt werden kann.

Die als Zahnräder ausgeführten Planetenräder des Planetenradgetriebes sind auf ihren Achsen frei drehbar, wobei sie antriebsseitig mit einem über das Antriebselement angetriebenen Sonnenrad in Eingriff stehen und abtriebsseitig mit einem das Schwenkrad und damit den jeweiligen Wickelteller antreibenden Glockenrad.

In Abhängigkeit von dem Übertragungsmoment führt der Planetenradträger eine Eigenrotation durch. Dabei nimmt er den mit ihm verbundenen Kupplungsteil mit. Wird der Planetenradträger durch Mittel zur Blockierung, vorteilhafterweise einen Verriegelungsschieber, blockiert, so wird ein vorgegebenes Übertragungsmoment direkt von dem Antriebsteil über die Planetenräder und das Glockenrad an die Wickelteller abgegeben, z.B. beim Umspulen.

Es erweist sich als vorteilhaft, daß Unterschiede der Federstärke der sich zwischen Planetenradträger und Kupplungsteil abstützenden Druckfeder kaum Einfluß auf die geforderten Kupplungseigenschaften haben. Es kann z.B. ein billigeres Federmaterial mit relativ großen Toleranzen und flacher Federkennlinie verwendet werden.

Zur näheren Erläuterung der Erfindung werden im folgenden mehrere Ausführungsbeispiele anhand der Zeichnungen beschrieben.

Diese zeigen in:
- Fig. 1: eine schematische perspektivische Darstellung des erfindungsgemäßen Teiles eines Magnetbandkassettenrecorders;
- Fig. 2: eine schematische Darstellung einer Rutschkupplungsanordnung gemäß Fig. 1;
- Fig. 3: einen Vertikalschnitt einer erfindungsgemäßen Ausführungsform der Rutschkupplungsanordnung und
- Fig. 4: eine Draufsicht einer erfindungsgemäßen Ausführungsform gemäß Fig. 3.

Es wird darauf hingewiesen, daß übereinstimmende Teile jeweils mit gleichen Bezugszeichen versehen sind.

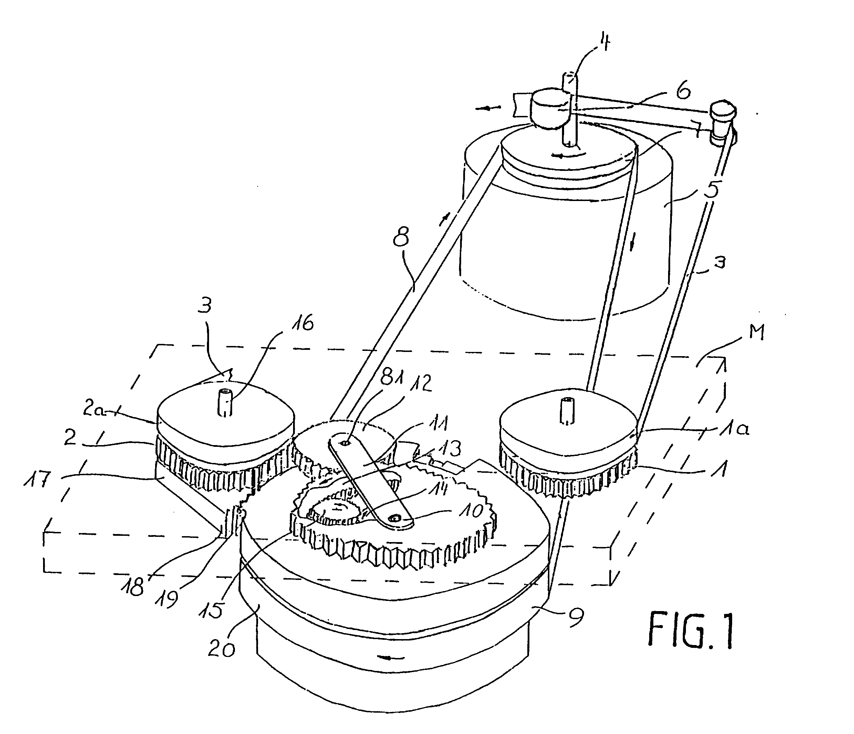

Fig. 1 zeigt perspektivisch zwei nebeneinanderliegende Wickelteller 1, 2 eines Magnetbandkassettenrecorders, auf die im Betrieb die gesonderte, nur angedeutete Magnetbandkassette M aufgelegt wird. Zu dem rechts gelegenen Wickelteller 1 bzw. dem auf ihn gelegten Spulenwickel 1a führt das nur angedeutete Magnetband 3 über die Bandantriebswelle 4 des Bandantriebsmotors 5. Eine Andruckrolle 6, vorzugsweise eine Gummiandruckrolle, drückt das Magnetband 3 an die Bandantriebswelle 4 des darunter angeordneten Bandantriebsmotors 5 an. Auf derselben Bandantriebswelle 4 des Bandantriebsmotors 5 befindet sich unterhalb der Stelle, an der die Andruckrolle 6 das Magnetband 3 an die Bandantriebsrolle 4 andrückt, eine Riemenscheibe 7. Die Riemenscheibe 7 nimmt das Antriebselement, vorzugsweise einen Riemen 8 auf, der mit dem angetriebenen Teil, vorzugsweise einer weiteren Riemenscheibe 9 des Planetenradgetriebes in Verbindung steht. Der Riemen 8 umschlingt die beiden Riemenscheiben 7, 9.

Die Riemenscheibe 9 rotiert um die ortsfeste Achse 10. Die Achse 10 ist zwischen dem Abwickelteller 2 und dem Aufwickelteller 1 in einem Abstand zu beiden Wickeltellern 1, 2 angeordnet. Um diese Achse 10 ist ein Schwenkarm 11 schwenkbar gelagert. Auf dem Schwenkarm 11 ist ein Schwenkrad 12 drehbar gelagert. Der Abstand der Achse 10 von den Wickeltellern ist so bemessen, daß das auf dem Schwenkarm 11 drehbar um die Achse 81 gelagerte Schwenkrad 12 sowohl mit dem Aufwickelteller 1 als auch mit dem Abwickelteller 2 in Eingriff gebracht werden kann. In Fig. 1, mit der die Gerätebetriebsart "Suchlauf rückwärts" dargestellt ist, liegt das Schwenkrad 12 an dem Abwickelteller 2 an.

Ein Glockenrad 13 ist ebenfalls auf der ortsfesten Achse 10 drehbar gelagert. Der Antrieb der Wickelteller 1, 2 erfolgt von dem Bandantriebsmotor 5 aus über die Bandantriebswelle 4, die Riemenscheibe 7, den Riemen 8, die Riemenscheibe 9 und das Planetenradgetriebe. Das Planetenradgetriebe besteht aus dem vorzugsweise mit der Riemenscheibe einstückigen Sonnenrad 14, den Planetenrädern 15 und dem Glockenrad 13. Das Glockenrad 13 überträgt die Kraft auf das Schwenkrad 12, das mit einem der Wickelteller 1, 2 in Eingriff steht.

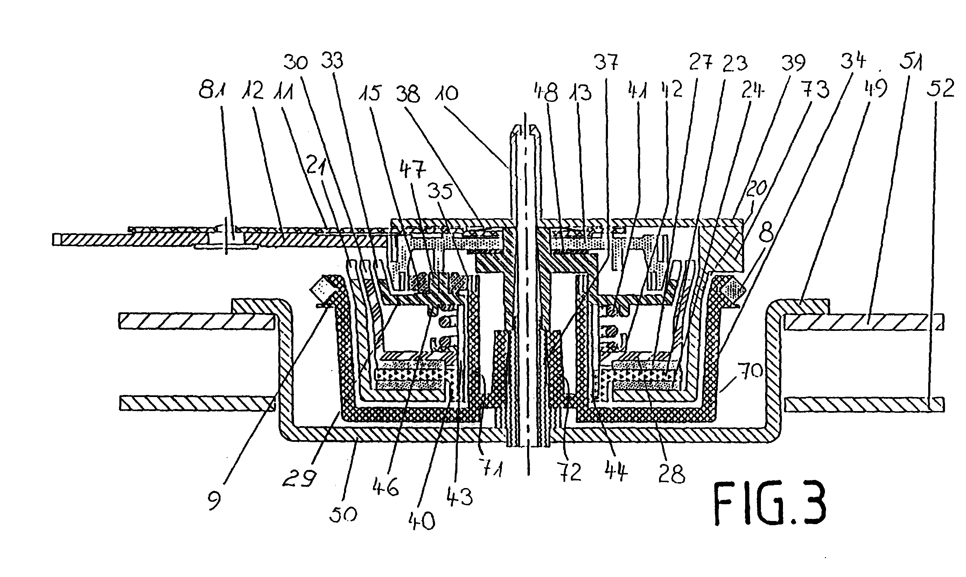

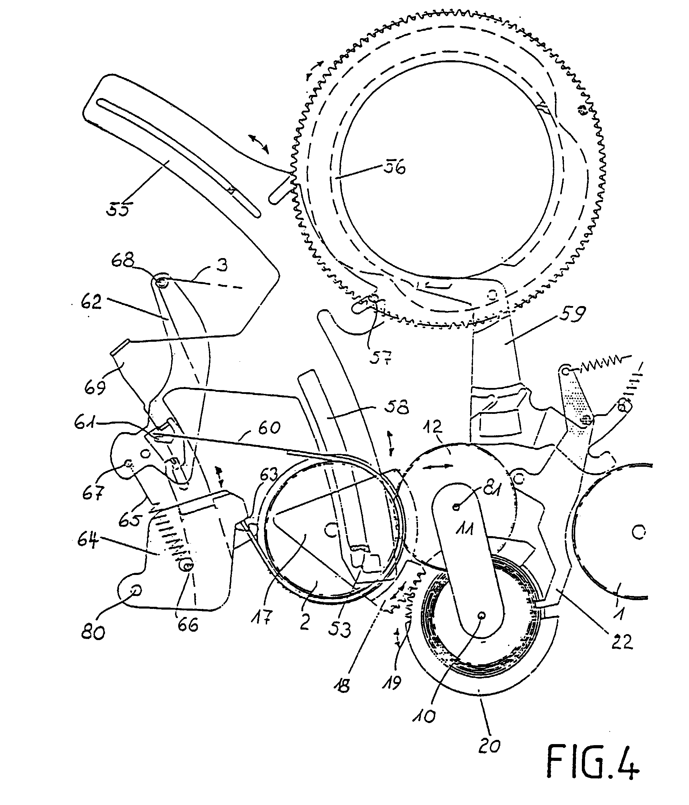

Unter dem Abwickelteller 2 ist ein um die Achse 16 des Abwickeltellers 2 drehbarer Bewegehebel 17 angeordnet, der durch einen entsprechenden dem gewählten Betriebszustand verstellbaren Steuerschieber 55 (Fig. 4) verstellbar gelagert ist. Der Bewegehebel 17 weist ein Verzahnungsteil 18 auf, das in ein Verzahnungsteil 19 eines Kupplungsteils 20 eingreift. Das Kupplungsteil 20 ist um die Achse 10 drehbar gelagert und ist auf der Achse 10 unterhalb des Glockenrades 13 und unterhalb des Sonnenrades 14 angeordnet. Durch den Bewegehebel 17 läßt sich das Kupplungsteil 20 um die ortsfeste Achse 10 drehen, wobei der mit dem Kupplungsteil 20 über eine Halteplatte 39 (Fig. 3) starr verbundene Schwenkarm 11 mit dem an ihm angeordneten Schwenkrad 12 mit dem jeweils anderen Wickelteller 1, 2 in Eingriff gebracht werden kann.

Diese Art des Schwenken des Schwenkarmes 11 wird beim Umschalten von Play in Review oder umgekehrt verwendet. Der Schwenkarm 11 kann aber auch allein durch Drehrichtungsumkehr des Capstanmotors geschwenkt werden, z.B. für den Umspulbetrieb.

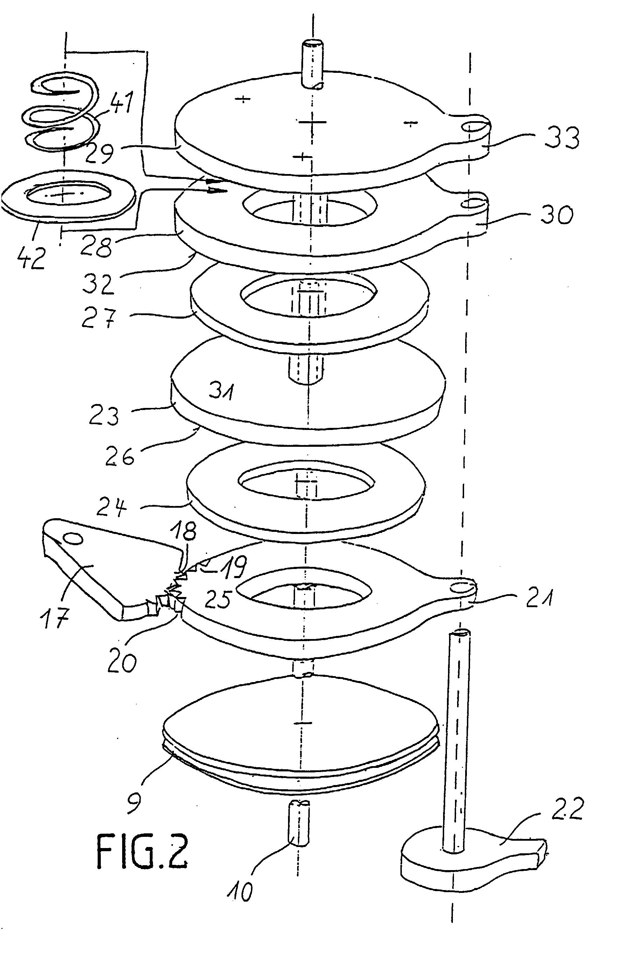

Fig. 2 zeigt eine Explosionsdarstellung einer erfindungsgemäßen vereinfachten Rutschkupplungsanordnung gemäß Fig. 1. Auf der ortsfesten Achse 10 ist als unterstes Element die Riemenscheibe 9 drehbar gelagert. Darüber ist ein Kupplungsteil 20 gelagert, dem ein auf einer Seite des Kupplungsteils angefügtes Haltemittel 21 zugeordnet ist. Durch diese Haltemittel 21 kann ein Verriegelungsschieber 22 zur Blockierung der Umdrehung des Kupplungsteils 20 hindurchgeführt werden.

Über dem Kupplungsteil 20 ist auf der Achse 10 ein Kupplungsteil 23, im folgenden drittes Kupplungsteil 23 genannt, so gelagert, daß es mit dem Planetenradträger 29 verbunden ist. Diesem dritten Kupplungsteil 23 ist kein Haltemittel 21 zugeordnet. Zwischen dem Kupplungsteil 20, im folgenden erstes Kupplungsteil 20 genannt, und dem dritten Kupplungsteil 23 ist ein Reibungselement 24, vorzugsweise ein Filzring, angeordnet. Dieses Reibungselement 24 kann gesondert angeordnet sein oder auf einer der gegenüberliegenden Reibungsflächen 25, 26 der Kupplungsteile 20, 23.

Der Bewegehebel 17 hält das erste Kupplungsteil 20 durch die ineinandergreifenden Verzahnungen 18 - 19 fest. Bei angetriebener Riemenscheibe 9 werden zunächst über Sonnenrad 14 Planetenräder 15 und Glockenrad 13 in Drehung versetzt. Dabei schwenkt der Schwenkhebel 11 entsprechend der Drehrichtung des Bandantriebsmotors 5 an den jeweiligen Wickelteller 1, 2. Das Band 3, das zwischen Bandantriebswelle 4 und Andruckrolle 6 transportiert wird, wird aufgewickelt. Durch die gewählte höhere Übersetzung will der aufwickelnde Wickel mehr Band aufwickeln als durch Bandantriebswelle 4 und Andruckrolle 6 freigegeben wird, wodurch der Planetenradträger 29 mit dem dritten Kupplungsteil 23 in Drehung versetzt wird. Entsprechend der Federkraft und des Durchmessers des Filzringes 24 steht dann ein einsprechendes Drehmoment am angetriebenen Wickelteller. In beiden Antriebsrichtungen (Play / Review) steht das gleiche Drehmoment am entsprechenden angetriebenen Wickelteller 1 bzw. 2.

Über dem dritten Kupplungsteil 23 ist auf der Achse 10 ein weiterer Kupplungsteil 28 angelagert, im folgenden zweiter Kupplungsteil 28 genannt. Zwischen diesem und dem dritten Kupplungsteil 23 befindet sich ein Reibungselement 27, vorzugsweise ein Filzring, im folgenden zweites Reibungselement 27 genannt. Auf einer Seite ist an diesem zweiten Kupplungsteil 28 ein Haltemittel 30 angeordnet, in das der Verriegelungsschieber 22 eingreifen kann. Das zweite Reibungselement 27 wirkt in derselben Weise auf die Kupplungsflächen 31, 32 wie das Reibungselement 24, im folgenden ersten Reibungselement 24 genannt, auf die Kupplungsflächen 25, 26. Wird der zweite Kupplungsteil 28 durch den Verriegelungsschieber 22 blockiert, so wird das dritte Kupplungsteil 23 stärker abgebremst als in dem Fall, wenn nur der erste Kupplungsteil 20 blockiert wird.

Über dem zweiten Kupplungsteil 28 ist der Planetenradträger 29 gelagert. Zwischen dem zweiten Kupplungsteil 28 und dem Planetenradträger 29 ist eine Druckfeder 41 und eine Scheibe 42 konzentrisch angeordnet. Im Review-Betrieb, wenn das Kupplungsteil 28 durch den Verriegelungsschieber 22 blockiert wird, entsteht ein zusätzliches Reibmoment zwischen der Scheibe 42 und dem zweiten Kupplungsteil 28, welches zum Gesamtmoment beiträgt. Auf einer Seite ist auf dem Planetenradträger 29 ein Haltemittel 33 angeordnet, das durch den Verriegelungsschieber 22 blockierbar ist. Wird der Planetenradträger 29 durch den Verriegelungsschieber 22 blockiert, so wird die gesamte Rutschkupplung damit unwirksam. Dies wird bei dem Betriebszustand des Umspulens notwendig.

Fig. 3 zeigt einen Vertikalschnitt einer Rutschkupplungsanordnung gemäß Fig. 2. Auf der ortsfesten Achse 10 sind wie in Fig. 2 die Kupplungsteile 20, 23, 28 und der Planetenradträger 29 übereinander gelagert. Das unterste, angetriebene, auf der Achse 10 drehbar gelagerte Element 34 beinhaltet die Riemenscheibe 9. Es ist topfförmig aufgebaut mit einer äußeren die Riemenscheibe 9 zur Aufnahme des Riemens 8 beinhaltenden Wandung 70 und einer inneren, der Achse 10 zugewandten Wandung 71. Die im wesentlichen parallel zu der Achse 10, mit Abstand zu dieser verlaufende innere Wandung 71 weist an ihrem oberen Rand eine Verzahnung 35 auf, die der Verzahnung des Sonnenrades 14 entspricht. Die der Achse 10 zugewandte Wandung 72 des topfförmigen Elementes 34 könnte direkt zur Lagerung auf der Achse 10 oder einer anliegenden Buchse 37 genutzt werden.

Auf der Buchse 37 und der Wandung 72 stützt sich der Planetenradträger 29 auf, wobei er auf dem oberen umlaufenden Teil der Buchse 37 und der Achse 10 drehbar gelagert ist. Eine über dem Planetenradträger 29 angeordnete Federscheibe 38 stützt diesen gegen eine Halteplatte 39 ab. Die Federscheibe 38 dient zu einer Erzeugung eines Drehmoments auf den Schwenkarm 11, damit dieser entsprechend der Drehrichtung an den entsprechenden Wickel 1, 2 schwenkt. Dieses Moment bildet ein Verlustmoment, welches bei der Dimensionierung des Gesamtdrehmoments berücksichtigt ist. Die Halteplatte 39 ist an ihrem äußeren Rand zumindest teilweise mit dem ortsfesten, über dem Element 34 bzw. der Riemenscheibe 9 angeordneten ersten Kupplungsteil 20 verbunden. An den die Teile 39 und 20 verbindenden Rändern dieser Teile ist der umlaufende Rand 73 des ersten Kupplungsteils 20 verdickt und auskragend ausgebildet. Ein Teilstück 21 des Randes 73 kann als Aussparung ausgebildet sein, um den Durchtritt eines Verriegelungsschiebers 22 zu ermöglichen.

Der umlaufende, unterhalb des oberen Randes 73 angeordnete Teil des ersten Kupplungsteils 20 ist im Innenbereich des topfförmigen Elementes 34 im wesentlichen parallel zu dessen Wandungen 70, 71, somit ebenfalls topfförmig. Der innere, zu der Achse 10 weisende Rand des ersten Kupplungsteils 20 ist weder an der Innenwand des topfförmigen Elementes 34 noch an der Achse 10 oder dem Planetenradträger 29 angelagert.

Die Verbindung zwischen dem ersten Kupplungsteil 20 und dem darüber angeordneten dritten Kupplungsteil 23 wird durch ein erstes Reibungselement 24 geschaffen, das an einem der Kupplungsteile 20, 23 befestigt sein kann. Das erste Reibungselement 24 ist ringförmig und reicht von dem inneren, zu der Achse 10 gerichteten Rand des ersten Kupplungsteils 20 bis ungefähr an den äußeren, von der Achse 10 weggerichteten Rand des dritten Kupplungsteils 23.

Das dritte Kupplungsteil 23 ist durch ein parallel zu der Achse 10 verlaufendes etwa buchsenförmiges Teilstück 40 auf einem die Achse 10 buchsenförmig umschließenden Ansatz 44 des Planetenradträgers 29 angeordnet. Die Verbindung von drittem Kupplungsteil 23 und Planetenradträger 29 erfolgt starr, beispielsweise durch Nut 43 und Feder 40. Somit wird der dritte Kupplungsteil 23 von dem Planetenradträger 29 bei dessen Rotation mitgenommen, ist aber in der Vertikalen verschiebbar gelagert, um die Reibung ein- bzw. nachstellen zu können. Der rechtwinklig abgebogene Teil des dritten Kupplungsteils 23 ist scheibenförmig in horizontaler Richtung ausgebildet, ohne sich topfförmig parallel zu der Achse 10 und dem ersten Kupplungsteil 20 nach oben abzuwinkeln.

Über dem dritten Kupplungsteil 23 ist ein weiteres zweites Reibungselement 27 angeordnet. Dieses verläuft ringförmig, parallel zu dem ersten Reibungselement 24, wobei es vorzugsweise dieselben Abmaße zeigt.

Oberhalb des zweiten Reibungselementes 27 ist ein weiterer, zweiter Kupplungsteil 28 angeordnet. Dieser steht zwar mit dem Planetenradträger 29 in Verbindung, jedoch in Form einer Gleitverbindung. Der zweite Kupplungsteil 28 wird mittels einer Druckfeder 41 auf das zweite Reibungselement 27 gedrückt. Das zweite Kupplungsteil 28 ist topfförmig und verläuft parallel zu dem ersten Kupplungsteil 20. Der obere umlaufende Rand der hier einheitlich dick ausgeformten Wandung des zweiten Kupplungsteils 28 zeigt Halteteile 30 zur Blockierung der Umdrehung des zweiten Kupplungsteils 28 durch einen Verriegelungsschieber 22.

Die Druckfeder 41 stützt sich zwischen dem darüber befindlichen Planetenradträger 29 und einem auf dem zweiten Kupplungsteil 28 gleitend gelagerten, mit dem Planetenradträger 29 in Eingriff stehenden Plattenelement 42 ab. Das Plattenelement 42 ist in einer Nut 43 des Plattenträgers 29 in der Vertikalen verschiebbar gelagert. Durch die Verschiebbarkeit von Plattenelement 42 und drittem Kupplungsteil 23 in der Vertikalen und der Führungsnut 43 des Planetenradträgers 29 wird mittels der Druckfeder 41 die Reibungskraft der beiden Reibungselemente 24, 27 eingestellt.

Der Planetenradträger 29 weist einen achsparallel zu der Achse 10 verlaufenden Ansatz 44 auf, der gleitend an die Riemenscheibe 9 angelagert ist. Dieser weist die obengenannten Führungsnuten 43 auf. Der horizontale, scheibenförmig umlaufende Teil 45 des Planetenradträgers 29 weist auf seiner Unterseite einen auskragenden umlaufenden Rand 46 auf. Dieser Rand 46 und der umgebogene Rand des Plattenelementes 42 bilden die Begrenzung für die Druckfeder 41.

Auf der Oberfläche des scheibenförmigen Teiles 45 erheben sich entsprechend der Anzahl der Planetenräder 15 Nocken 47, auf denen die Planetenräder 15 gelagert sind.

Der wie die Kupplungsteile 20, 28 topfförmig ausgeformte Planetenradträger 29 weist an seinem oberen Rand Haltemittel 33 auf zum Blockieren seiner Umdrehung durch den Verriegelungsschieber 22.

Die auf der Oberfläche des Planetenradträgers 29 gelagerten Planetenräder 15 stehen einerseits im Eingriff mit dem an der Riemenscheibe 9 angefügten Sonnenrad 14, andererseits mit dem Glockenrad 13. Das Glockenrad ist um die Achse 10 drehbar auf dem Planetenradträger 29 angelagert. Ein zwischen der Unterseite des Glockenrades 13 und einer Oberfläche des Planetenradträgers 29 angeordneter Ring 48 ermöglicht durch eine Gleitverbindung die Drehbarkeit des Glockenrades 13.

Das Glockenrad 13 treibt mit seinem Umfang ein Schwenkrad 12 an, das seinerseits den jeweils angelegten Wickelteller 1, 2 antreibt. Dieses Schwenkrad 12 ist über einen an dem Planetenradträger 29 oberhalb des Glockenrades 13 angelagerten, das Schwenkrad 12 tragenden Schwenkarm 11 um die ortsfeste Achse 10 schwenkbar. Dadurch wird der Eingriff des Schwenkrades 12 in den jeweiligen Wickelteller 1, 2 zum Antrieb derselben ermöglicht.

Die gesamte Anordnung läßt sich in einem topfförmigen Gehäuse 49 lagern. Die um die Achse 10 angeordnete Buchse 37 wird dafür in dem Boden des Gehäuses 49 drehfest gelagert. Es besteht die Möglichkeit, das Gehäuse 49 an seinem oberen Rand in der Platine 51 für die Lagerung des Laufwerkes zu befestigen. Dadurch können die Rutschkupplungsanordnung und der Bandantriebsmotor 5 auf einer Platine gelagert werden. Unterhalb der Platine 51 für die Lagerung des Laufwerkes befindet sich beispielsweise die Platine 52 für die Elektronikbauteile, z.B. für die Steuerung des Bandantriebsmotors 5.

Fig. 4 zeigt eine Draufsicht einer Gesamtanordnung mit zwei nebeneinander gelegenen Wickeltellern 1, 2. In einem bestimmten Abstand von diesen Wickeltellern 1, 2 ist die um die Achse 10 drehbar gelagerte Rutschkupplungsanordnung aus Fig. 3 angeordnet. Das Schwenkrad 12 steht in Eingriff mit dem links gelegenen Abwickelteller 2. Der Verriegelungsschieber 22 ragt in dieser Stellung von außen durch das erste Kupplungsteil 20 durch die Öffnung 21 (Fig. 3) und blockiert das zweite Kupplungsteil 28 durch Eingriff in dessen Halteteil 30. Das Verzahnungsteil 19 an dem ersten Kupplungsteil 20 steht mit dem Verzahnungsteil 18 des Bewegehebels 17 in Eingriff. Der Bewegehebel 17 ist um die Achse 16 des Abwickeltellers 2 drehbar gelagert. Eine auf der Oberfläche des Bewegehebels 17 angeordnete Nase 53 wird in einer Führungsnut 54 eines Steuerschiebers 55 geführt.

Mittels des Steuerschiebers 55 läßt sich die Position des Bewegehebels 17 einstellen. Wird der Steuerschieber 55 in Fig. 4 gegen die Nase 53 des Bewegehebels 17 bewegt, so dreht der Bewegehebel 17 im Uhrzeigersinn. Durch den Eingriff der Verzahnungsteile 18, 19 von Bewegehebel 17 und erstem Kupplungsteil 20 bewegt sich letzterer und somit die Rutschkupplungsanordnung gegen den Uhrzeigersinn. Das Schwenkrad 12 schwenkt somit von dem Aufwickelteller 1 zum Abwickelteller 2.

Wird der Steuerschieber 55 von dem Abwickelteller 2 wegbewegt, nimmt er die Nase 53 des Bewegehebels 17 mit. Entsprechend wird das Schwenkrad 12 zu dem Aufwickelteller 1 geschwenkt.

Ein Ladering 56 steuert die Positionen des Steuerschiebers 55. Zu diesem Zweck weist der Ladering 56 vorzugsweise auf seiner Unterseite Führungsstifte 57 auf, in die der Steuerschieber 55 mit einer weiteren Führungsnut 58 eingreifen kann. Durch Drehung des Laderings 56 gegen den Uhrzeigersinn bewegt sich der Steuerschieber 55 gegen die Nase 53 des Bewegehebels 17.

Ein in eine kurvenförmige Ausnehmung des Laderings 56 eingreifender Steuerhebel 59 steuert eine nicht dargestellte Hilfsbremse, welche im Review-Betrieb den Wickelteller 1 bremst. Weiterhin ist es denkbar, daß der Steuerhebel 59 nicht dargestellte Haupt- und Hilfsbremsen steuert, die das Abwickeln des Magnetbandes 3 von dem Aufwickelteller 1 verhindern. Der Verriegelungsschieber 22 wird ebenfalls von dem Steuerhebel 59 gesteuert, entsprechend dem gewünschten Betriebszustand.

Der Ladering 56 wird von einem nicht dargestellten Lademotor bzw. Fädelmotor angetrieben bzw. gedreht. Der Drehungsumfang ergibt sich aus dem gewünschten Betriebszustand, der einen nicht dargestellten Codeschalter aktiviert. Dieser wirkt auf den Lademotor ein.

Zur Sicherstellung eines nahezu konstanten Bandzuges an dem Abwickelteller 2 ist ein diesen Wickelteller 2 umschlingendes Bremsband 60 vorgesehen. Das Bremsband 60 liegt an seinem einen Ende an einem nasenartigen Vorsprung 61 eines Bandzugfühlhebels 62 an. Mit seinem anderen Ende stößt es gegen einen Vorsprung 63 eines Bremsbandlösehebels 64. Der Bandzugfühlhebel 62 und der Bremsbandlösehebel 64 sind mittels einer Feder 65 miteinander verbunden. Diese umgreift auf der Oberfläche des Bremsbandlösehebels 64 einen hervorragenden Stift 66 und hält sich an dem Bandzugfühlhebel 62 in einem Loch 67 fest.

Der Bandzugfühlhebel 62 weist an seinem Arm einen Stift 68 auf, der von dem Magnetband 3 umschlungen wird. Durch die drehbare Lagerung des Bandzugfühlhebels, ergänzt durch die Anordnung aus Bremsband 60, Bremsbandlösehebel 64 und Steuerschieber 55 ist es möglich, den Bandzug des Magnetbandes 3 zu steuern. Der Steuerschieber 55 ist so ausgeformt, daß er mit einem Arm 69 gegen den Bremsbandlösehebel 64 drücken kann. Dadurch wird das Bremsband 60 gelockert und der Bandzug ebenso vermindert. Drückt der Arm 69 des Steuerschiebers 55 nicht gegen den Bremsbandlösehebel 64, so wird der Bandzug durch die Spannung des Bremsbandes 60 bzw. der Feder 65 zwischen Bremsbandlösehebel 64 und Bandzugfühlhebel 62 bestimmt.

Die jeweilige Konstellation der Anordnung in den verschiedenen Betriebszuständen soll im folgenden näher unter Bezugnahme auf die vorstehend beschriebenen Zeichnungen näher erläutert werden.

### 1. Abspielbetrieb/Suchlauf vorwärts:

In diesem Betriebszustand ist ein schwaches Übertragungsmoment notwendig, das von dem Bandantriebsmotor 5 an den Wickelteller 1 abgegeben werden soll. Durch den Bewegungshebel 17, dessen Verzahnung 18 in die Verzahnung 19 des ersten Kupplungsteils 20 eingreift, wird dieser festgehalten. Dadurch ist das erste Reibungselement 24 zwischen diesem ersten Kupplungsteil 20 und dem zweiten Kupplungsteil 23 wirksam. Entsprechend der eingestellten Andruckkraft wird der dritte Kupplungsteil 23 zunächst festgehalten. Durch die Verbindung von drittem Kupplungsteil 23 und Planetenradträger 29 wird auch dieser zunächst festgehalten. Erst bei ansteigendem von der antreibenden Riemenscheibe 9 übertragenen Drehmoment beginnt der dritte Kupplungsteil 23 durchzurutschen. Der Planetenradträger 29 führt eine Eigenrotation in Richtung des Antriebsteils der Riemenscheibe 9 durch. Dadurch wird das auf den Abtriebsteil, das Schwenkrad 12, übertragbare Moment mittels der Rutschkupplung begrenzt. Dies bewirkt entsprechend einen Bandzug am Aufwickelteller 1.

Im Abspielbetrieb bzw. Suchlauf vorwärts liegt das Schwenkrad 12 an dem Aufwickelteller 1 an.

### 2. Suchlauf rückwärts:

In diesem Betriebszustand ist es notwendig, ab einem bestimmten Wickeldurchmesser, ein höheres Drehmoment von dem Antriebsteil, der Riemenscheibe 9, an den Abtriebsteil, das Schwenkrad 12 bzw. den Wickelteller 2 zu übertragen. Dafür werden durch den Verriegelungsschieber 22 sowohl der erste Kupplungsteil 20 als auch der zweite Kupplungsteil 28 blockiert und somit an der Umdrehung gehindert.

Die Reibungselemente 24, 27 sind wirksam. Dadurch wird der dritte Kupplungsteil 23 von beiden Reibungselementen 24, 27 festgehalten. Wie oben beschrieben wird ebenfalls der Planetenradträger 29 festgehalten. Die durch die Reibungselemente 24, 27 erzielte Reibungskraft ist dem Betrage nach größer als in dem zuvor geschilderten Fall des Abspielbetriebes. Bei ansteigendem von dem Antriebsteil gelieferten Drehmoment rutscht der dritte Kupplungsteil 23 zunächst noch nicht durch. Erst bei Überschreiten einer durch die Andruckkraft der Kupplungsteile 20, 23, 28 gegen die Reibungselemente 24, 27 einstellbaren Grenze rutscht der dritte Kupplungsteil 23 durch. Der Planetenradträger 29 führt wiederum eine Eigenrotation in Richtung des Antriebsteils durch. Damit wird auch hier das übertragbare Moment begrenzt und der Bandzug des Abwickeltellers 2 sichergestellt.

Beim Suchlauf rückwärts liegt das Schwenkrad 12 an dem Abwickelteller 2 an.

### 3. Umspulen vor- und rückwärts:

In diesem Betriebszustand werden der erste Kupplungsteil 20, der zweite Kupplungsteil 28 und der Planetenradträger 29 mittels des Verriegelungsschiebers 22 blockiert. Dadurch wird die Rutschkupplung übergangen und das Drehmoment direkt von dem Antriebsteil, der Riemenscheibe 9, über die Planetenräder 15 an das Glockenrad 13 weitergegeben, von dort an das Schwenkrad 12 und den jeweiligen Wickelteller 1, 2.

Das Umspulen erfolgt entweder bei vollständig eingefädeltem Magnetband 3 und abgehobener Andruckrolle 6 oder bei halb eingefädeltem Magnetband 3, d.h. daß das Magnetband an dem in den Zeichnungen nicht dargestellten AC-Kopf anliegt, oder bei ausgefädeltem Band.

### 4. Drehrichtungsumkehr:

Für die Drehrichtungsumkehr der Drehrichtung der Wickelteller 1, 2 von dem Abspielbetrieb in den "Suchlauf rückwärts"-Betrieb bleibt die Andruckrolle 6 an der Bandantriebswelle 4 des Bandantriebsmotors 5. Der Bandantriebsmotor 5 kommt in eine Stop-Position und das Bremsband 60 ist gespannt, d.h. der Steuerschieber 55 drückt gegen die Nase 53 des Bewegehebels 17 und nicht gegen den Vorsprung 63 des Bremsbandlösehebels 64. Der nicht dargestellte Lademotor wird durch den ebenfalls nicht dargestellten Codeschalter dahingehend aktiviert, daß der Ladering 56 sich entgegen dem Uhrzeigersinn dreht. Dadurch bewegt sich der Steuerschieber 55 gegen die Nase 53 des Bewegehebels 17. Dieser bewegt sich mit dem Uhrzeigersinn und nimmt den mit seinem Verzahnungsteil 18 in Eingriff stehenden Verzahnungsteil 19 des ersten Kupplungsteils 20 mit. Das erste Kupplungsteil 20 wird dadurch gegen den Uhrzeigersinn um die ortsfeste Achse 10 gedreht. Durch die Verbindung von erstem Kupplungsteil 20 und Halteplatte 39 wird auch diese um die Achse 10 gedreht. Da die Halteplatte 39 und der Schwenkarm 11 über die Federscheibe 38 verbunden sind, wird bei der Drehbewegung der Halteplatte 39 um die Achse 10 der Schwenkarm 11 geschwenkt. Das an dem Schwenkarm 11 angeordnete Schwenkrad 12 kommt damit mit dem Abwickelteller 2 in Eingriff. Das Bremsband 60 wird dadurch entlastet, daß die Nase 53 in der Führungsnut 58 des Steuerschiebers 55 in eine solche Position kommt, daß der Arm 69 des Steuerschiebers 55 gegen den Bremsbandlösehebel 64 stößt. Dadurch wird dieser im Uhrzeigersinn um die ortsfeste Achse 80 des Bremsbandlösehebels 64 gedreht. Der Vorsprung 63 des Bremsbandlösehebels 64 drückt gegen das Bremsband 60 und entlastet dieses.

Aufwickelseitig geschieht entsprechendes wie bereits oben beschrieben. Der Steuerhebel 59 verhindert entweder direkt oder durch Ansteuern von Bremsen ein Abwickeln des Magnetbandes 3 von dem Aufwickelteller 1 während des Schwenkens des Schwenkrades 12 zwischen den Wickeltellern 1, 2.

Für den umgekehrten Fall der Drehrichtungsumkehr von dem Betrieb "Suchlauf rückwärts" in den Abspielbetrieb geschieht entsprechendes wie oben beschrieben, wobei das Schwenkrad 12 zunächst mit dem Abwickelteller 2 in Eingriff bleibt. Da der Arm 69 des Steuerschiebers 55 nicht mehr gegen den Bremsbandlösehebel 64 drückt, wird das Bremsband 60 durch die zwischen Bremsbandlösehebel 64 und Bandzugfühlhebel 62 eingehängte Feder 65 wieder gespannt. Dadurch wird der Bandzug sichergestellt bzw. das Abwickeln des Magnetbandes 3 von dem Abwickelteller 2 verhindert.

Im Abspielbetrieb bleibt das Bremsband 60 wirksam und steuert über den Bandzugfühlhebel 62 den Bandzug des Magnetbandes 3.

## Patentansprüche

1. Magnetbandkassettenrecorder mit einem Aufwickel- (1) und einem Abwickelteller (2) zur Auf- bzw. Abwicklung eines Magnetbandes (3), die jeweils von einem außerhalb der Kassette angeordneten Bandantriebsmotor (5) für das Magnetband über ein um eine ortsfeste Achse (10) schwenkbares Schwenkrad (12) angetrieben werden, wobei eine Andruckrolle (6) das Magnetband an die Bandantriebswelle (4) des Bandantriebsmotors (5) andrückt und wobei der Bandantriebsmotor das Schwenkrad über ein Antriebselement (8) und ein antreibendes Element (9, 34) und ein eine Rutschkupplung (20/23/24/27/28) für beide Wickelteller aufweisendes Planetenradgetriebe (13/14/15) antreibt, **dadurch gekennzeichnet**, daß die Rutschkupplung (20/23/24/27/28) erste und zweite in Richtung der ortsfesten Achse (10) übereinander angeordnete, ringförmige Kupplungsteile (20, 28) mit einander zugewandten Kupplungsflächen (25, 32) aufweist, zwischen denen ein weiterer mit einem Planetenradträger (29) verbundener, dadurch antreibbarer, dritter Kupplungsteil (23) angeordnet ist, daß zwischen den beiden Kupplungsteilen (20, 28) und dem dritten Kupplungsteil (23) Reibungselemente (24, 27) angeordnet sind, und daß Mittel (22) zur Blockierung der Umdrehung eines oder beider der ersten und zweiten drehbaren ringförmigen Kupplungsteile (20, 28) vorgesehen sind.

2. Magnetbandkassettenrecorder nach Anspruch 1, **dadurch gekennzeichnet**, daß der Planetenradträger (29) oberhalb eines ringförmigen Kupplungsteils (28) angeordnet ist.

3. Magnetbandkassettenrecorder nach Anspruch 2, **dadurch gekennzeichnet**, daß zwischen dem Planetenradträger (29) und dem ihm benachbarten ringförmigen, dritten Kupplungsteil (28) kein Reibungselement (24, 27) vorgesehen ist.

4. Magnetbandkassettenrecorder nach Anspruch 1, **dadurch gekennzeichnet**, daß ein oder mehrere ringförmige Kupplungsteile (20, 28) und/oder der Planetenradträger (29) Haltemittel (21, 30, 33) aufweisen, und daß die Mittel (22) zur Blockierung der Umdrehung einzelner oder aller ringförmiger Kupplungsteile (20, 28) und/oder des Planetenradträgers (29) in die Haltemittel (21, 30, 33) eingreifbar ausgebildet sind.

5. Magnetbandkassettenrecorder nach Anspruch 4, **dadurch gekennzeichnet**, daß die Mittel (22) zur Blockierung der Umdrehung einzelner oder aller ringförmiger Kupplungsteile (20, 28) und/oder des Planetenradträgers (29) ein Verriegelungsschieber ist, der zur Blockierung in vorgegebener Reihenfolge wahlweise in ein oder mehrere Haltemittel (21, 30, 33) eingreift.

6. Magnetbandkassettenrecorder nach Anspruch 1, **dadurch gekennzeichnet**, daß das Reibungselement (24, 27) ein Filz ist.

7. Magnetbandkassettenrecorder nach Anspruch 1, **dadurch gekennzeichnet**, daß das Antriebselement (8) ein Riemen ist.

8. Magnetbandkassettenrecorder nach Anspruch 5, **dadurch gekennzeichnet**, daß am Umfang des einen ersten Kupplungsteils (20) ein Verzahnungsteil (19) vorgesehen ist, das zum Schwenken des Schwenkrades (12) in einen Bewegehebel (17) eingreifen kann.

9. Magnetbandkassettenrecorder nach Anspruch 8, **dadurch gekennzeichnet**, daß der Bewegehebel (17) an der Achse (16) eines der Wickelteller (1, 2) angelagert ist.

10. Magnetbandkassettenrecorder nach Anspruch 1 oder 5, **dadurch gekennzeichnet**, daß die Mittel (22) zur Blockierung der Umdrehung eines oder beider ringförmiger Kupplungsteile (20, 28) und/oder des Planetenradträgers (29) durch einen Steuerhebel (59) steuerbar sind.

11. Magnetbandkassettenrecorder nach Anspruch 1, **dadurch gekennzeichnet**, daß Rutschkupplung (20/23/24/27/28) und Planetenradgetriebe (13/14/15) als ein Element in einem Gehäuse (49) in eine Platine (51) einsetzbar sind.

12. Magnetbandkassettenrecorder nach Anspruch 11, **dadurch gekennzeichnet**, daß Rutschkupplung (20/23/24/27/28) und Planetenradgetriebe (13/14/15) als ein Element in einem Gehäuse (49) in dieselbe Platine (51) eingesetzt sind, auf der der Bandantriebsmotor (5) angeordnet ist.

## Claims

1. Magnetic tape cassette recorder with a take-up spool (1) and a feed spool (2) for winding up and unwinding a magnetic tape (3), which spools are both driven by a capstan motor (5), which is disposed outside of the cassette, for the magnetic tape via a tumbler gear (12) which can be swung about a stationary shaft (10), a pinch roller (6) pressing the magnetic tape against the capstan (4) of the capstan motor (5) and the latter driving the tumbler gear via a drive element (8), a driving element (9, 34) and a planetary gear system (13/14/15) having a friction clutch (20/23/24/27/28) for both winding spools, characterised in that the friction clutch (20/23/24/27/28) comprises two annular coupling parts (20, 28), which are disposed one above the other in the direction of the stationary shaft (10), with facing contact surfaces (25, 32), between which a further, third coupling part (23), which is connected to a planet carrier (29) and can be driven by the latter, is disposed, that friction elements (24, 27) are disposed between the two coupling parts (20, 28) and the third coupling part (23), and that means (22) are provided to prevent one or both rotatable annular coupling part (s) (20, 28) from rotating.

2. Magnetic tape cassette recorder according to claim 1, characterised in that the planet carrier (29) is disposed above an annular coupling part (28).

3. Magnetic tape cassette recorder according to claim 2, characterised in that there is no friction element (24, 27) between the planet carrier (29) and the annular, third coupling part (28), which is adjacent to the latter.

4. Magnetic tape cassette recorder according to claim 1, characterised in that one or more annular coupling part(s) (20, 28) and/or the planet carrier (29) comprise(s) holding means (21, 30, 33), and that the means (22) for preventing individual or all of the annular coupling parts (20, 28) and/or the planet carrier (29) from rotating are formed such that they can engage in the holding means (21, 30, 33).

5. Magnetic tape cassette recorder according to claim 4, characterised in that the means (22) for preventing individual or all of the annular coupling parts (20, 28) and/or the planet carrier (29) from rotating is a locking slide bar which engages either in one or several holding means (21, 30, 33) to prevent rotation in a predetermined order.

6. Magnetic tape cassette recorder according to claim 1, characterised in that the friction element (24, 27) is a felt.

7. Magnetic tape cassette recorder according to claim 1, characterised in that the drive element (8) is a belt.

8. Magnetic tape cassette recorder according to claim 5, characterised in that a toothed part (19) is provided at the circumference of the first coupling part (20), which toothed part can mesh with a moving lever (17) in order to swing the tumbler gear (12).

9. Magnetic tape cassette recorder according to claim 8, characterised in that the moving lever (17) is mounted on the shaft (16) of one of the winding spools (1, 2).

10. Magnetic tape cassette recorder according to claim 1 or 5, characterised in that the means (22) for preventing one or both annular coupling part(s) (20, 28) and/or the planet carrier (29) from rotating can be controlled by a control lever (59).

11. Magnetic tape cassette recorder according to claim 1, characterised in that the friction clutch (20/23/24/27/28) and the planetary gear system (13/14/15) can be fitted as one element in a housing (49) into a board (51).

12. Magnetic tape cassette recorder according to claim 11, characterised in that the friction clutch (20/23/24/27/28) and the planetary gear system (13/14/15) are fitted as one element in a housing (49) into the same board (51) on which the capstan motor (5) is disposed.

## Revendications

1. Enregistreur à bande magnétique avec plateaux de rebobinage (1) et de bobinage (2) permettant le rebobinage et le bobinage d'une bande magnétique (3), entraînés par un moteur d'entraînement de bande (5) placé à l'extérieur de la cassette sur un pignon tombant (12) pivotant autour d'un axe fixe (10), où un galet presseur (6) presse la bande magnétique sur le cabestan d'entraînement (4) du moteur d'entraînement (5) et où le moteur d'entraînement entraîne le pignon tombant sur un élément d'entraînement (8, 9, 34) et sur un engrenage planétaire (13/14/15) présentant un embrayage à glissement (20/23/24/27/28) pour les deux plateaux d'enroulement, **caractérisé en ce que** l'embrayage à glissement (20/23/24/27/28) présente les premier et deuxième membres d'embrayage (20, 28) en forme d'anneau, superposés en direction de l'axe fixe (10) avec des surfaces d'accouplement adjointes (25, 32) entre lesquelles est placé un autre troisième membre d'embrayage (23), pouvant être entraîné, assemblé à un porte-pignons satellites (29), les éléments de friction (24, 27) sont placés entre les deux membres d'embrayage (20, 28) et le troisième membre d'embrayage (23), des dispositifs de blocage de la rotation d'un ou du premier et deuxième membre sd'embrayage (20, 28), en forme d'anneau et pouvant toumer, sont prévus.

2. Enregistreur à bande magnétique, conforme à la revendication 1, **caractérisé en ce que** le porte-pignons satellites (29) est placé au-dessus d'un membre d'embrayage (28) en forme d'anneau.

3. Enregistreur à bande magnétique, conforme à la revendication 2, **caractérisé en ce qu'**aucun élément de friction (24, 27) n'est prévu entre le porte-pignons satellites (29) et le troisième membre d'embrayage (28) adjacent en forme d'anneau.

4. Enregistreur à bande magnétique, conforme à la revendication 1, **caractérisé en ce qu'**un ou plusieurs membres d'embrayage en forme d'anneau (20, 28) et/ou le porte-pignons satellites (29) présentent des dispositifs de support (21, 30, 33) et en ce que les dispositifs (22) de blocage de la rotation d'un ou de tous les membres d'embrayage (20, 28) en forme d'anneau et/ou du porte-pignons satellites (29) peuvent être engrenés dans les dispositifs de support (21, 30, 33).

5. Enregistreur à bande magnétique, conforme à la revendication 4, **caractérisé en ce que** le dispositif (22) de blocage de la rotation d'un ou de tous les membres d'embrayage (20, 28) en forme d'anneau et/ou du porte-pignons satellites (29) est un coulisseau qui peut être engrené au choix dans un ou plusieurs dispositifs de support (21, 30, 33) pour effectuer le blocage dans une série prédéfinie.

6. Enregistreur à bande magnétique, conforme à la revendication 1, **caractérisé en ce que** l'élément de friction (24, 27) est un feutre.

7. Enregistreur à bande magnétique, conforme à la revendication 1, **caractérisé en ce que** l'élément d'entraînement (8) est une courroie.

8. Enregistreur à bande magnétique, conforme à la revendication 5, **caractérisé en ce qu'**un élément d'engrenage (19) est prévu à la périphérie d'un premier membre d'embrayage (20) et peut être engrené dans un levier de commande (17) pour faire pivoter le pignon tombant (12).

9. Enregistreur à bande magnétique, conforme à la revendication 8, **caractérisé en ce que** le levier de libération (17) est monté sur l'axe (16) d'un des plateaux d'enroulement (1,2).

10. Enregistreur à bande magnétique, conforme à la revendication 1 ou 5, **caractérisé en ce que** le dispositif (22) de blocage de la rotation d'un ou des deux membres d'embrayage (20, 28) en forme d'anneau et/ou du porte-pignons satellites (29) peuvent être commandés par un levier de commande (59).

11. Enregistreur à bande magnétique, conforme à la revendication 1, **caractérisé en ce que** l'embrayage à glissement (20/23/24/27/28) et l'engrenage planétaire (13/14/15) peuvent être placés dans une platine (51) comme élément d'un boîtier (49).

12. Enregistreur à bande magnétique, conforme à la revendication 11, **caractérisé en ce que** l'embrayage à glissement (20/23/24/27/28) et l'engrenage planétaire (13/14/15) sont placés comme éléments d'un boîtier (49) dans la même platine (51) sur laquelle est placé un moteur d'entraînement (5).
